# EUROPÄISCHE PATENTSCHRIFT

(11) **EP 3 414 766 B1**
(45) Veröffentlichungstag und Bekanntmachung des Hinweises auf die Patenterteilung: **25.12.2019**
(21) Anmeldenummer: 17703310.7
(22) Anmeldetag: 09.01.2017
(51) Int. Cl.: H01B 1/02, H01B 1/22

(54) **VERFAHREN ZUR ÄTZUNG DER OBERFLÄCHE VON ALUMINIUM-KLEINKÖRPERN, ALUMINIUM-KLEINKÖRPER MIT GEÄTZTER OBERFLÄCHE UND SOLCHE KLEINKÖRPER ENTHALTENDE MATERIALVERBUNDE**
METHOD FOR ETCHING THE SURFACE OF ALUMINIUM FRAGMENTS, ALUMINIUM FRAGMENTS WITH AN ETCHED SURFACE AND MATERIAL COMPOSITES CONTAINING SUCH FRAGMENTS
PROCÉDÉ DE GRAVURE DE LA SURFACE DE CORPUSCULES EN ALUMINIUM, CORPUSCULES EN ALUMINIUM MUNIS D'UNE SURFACE GRAVÉE ET COMPOSITES DE MATIÈRES CONTENANT DE TELS CORPUSCULES

(30) Priorität: 11.02.2016 DE 102016102379
(43) Veröffentlichungstag der Anmeldung: 19.12.2018
(73) Patentinhaber: Christian-Albrechts-Universität zu Kiel, 24118 Kiel (DE)
(72) Erfinder: BAYTEKIN-GERNGROSS, Melike, 72770 Reutlingen (DE); GERNGROSS, Mark-Daniel, 72770 Reutlingen (DE); CARSTENSEN, Jürgen, 24146 Kiel (DE); ADELUNG, Rainer, 24147 Kiel (DE)
(74) Vertreter: Hansen, Jochen
(86) Internationale Anmeldenummer: PCT/DE2017/100011
(87) Internationale Veröffentlichungsnummer: WO 2017/137028

(56) Entgegenhaltungen:
- EP-A1- 2 298 525
- WO-A1-2010/076892
- WO-A1-2012/161183

## Beschreibung

Die Erfindung betrifft ein nasschemisches Ätzverfahren für Kleinkörper aus Aluminium und Aluminiumlegierungen. Die Erfindung betrifft außerdem Kleinkörper aus Aluminium oder einer Aluminiumlegierung, die mit dem Ätzverfahren herstellbar sind, sowie ferner Materialverbunde, die diese Kleinkörper enthalten.

Ein Materialverbund im Sinne dieser Beschreibung ist ein fester Werkstoff, der aus wenigstens einer zunächst fließfähigen und hiernach aushärtenden Materialphase gebildet wird, die in fließfähigem Zustand mit den Aluminium-Kleinkörpern kontaktiert, zumeist vermischt, wird. Das Aushärten der zunächst fließfähigen Materialphase kann beispielsweise durch thermisches Erstarren oder durch Polymerisation oder durch chemische Umsetzung, d.h. chemische Oxidation oder Reduktion wenigstens eines Bestandteils der zunächst fließfähigen Materialphase ggf. unter Austreiben von Lösungsmitteln, oder durch eine Kombination solcher Prozesse erfolgen. Die zunächst fließfähige Materialphase kann beispielsweise eine Polymerschmelze, eine Monomer- oder Polymerlösung, eine Sol-Gel-Lösung oder auch eine Suspension von Partikeln sein, die sich nach der Abscheidung aus der Suspension - etwa durch Trocknung - thermisch zu einem Verbund verschmelzen lassen.

Unter einem Kleinkörper versteht die vorliegende Beschreibung ein Objekt beliebiger Form mit einem Volumen kleiner als 1 Kubikzentimeter, typisch kleiner als 100 Kubikmillimeter, vorzugsweise im Bereich 0,1 bis 1 Kubikmillimeter, mit der Nebenbedingung, dass die kleinste Strukturbreite des Objekts größer als 50 Mikrometer, typisch größer als 200 Mikrometer, ist und vorzugsweise im Bereich 0,5 bis 5 Millimeter liegt. Kleinkörper sollen also Materialkörper mit einer vorbestimmten Mindestmaterialstärke entlang aller Raumachsen sein. Beispielsweise im Falle eines Quaders ist die kürzeste Kantenlänge die kleinste Strukturbreite, und für einen Drahtkörper gleich welcher Form ist die kleinste Strukturbreite der übliche Drahtdurchmesser. Für einen Kleinkörper in der Form eines Rotationstorus, der durch zwei Radien r, R mit r < R eindeutig beschrieben ist, ist der Durchmesser der Ringwulst, 2*r, die kleinste Strukturbreite.

Ein Kleinkörper ist gewöhnlich einzeln mit dem bloßen Auge sichtbar. Ein Kleinkörper ist ausdrücklich kein Nanopartikel und kann im Allgemeinen auch nicht mehr als Mikropartikel bezeichnet werden. Gängige alternative Bezeichnungen für Kleinkörper ohne präzise Formvorgabe in der Literatur sind Flocken ("flakes"), Schuppen ("scales"), Nadeln ("nodules") oder auch Granulate für eine Ansammlung von Kleinkörpern. Als ein allgemeines Synonym für Kleinkörper dient gelegentlich der Begriff Fragment.

In dieser Beschreibung soll der Begriff Aluminium-Kleinkörper abkürzend als Sammelbegriff sowohl für Kleinkörper bestehend aus dem (nahezu) reinen Elementmetall als auch aus den technisch gängigen Legierungen von vorwiegend Aluminium mit Mangan, Magnesium, Kupfer, Silizium, Nickel, Zink und Beryllium benutzt werden. In der Regel bestehen die Aluminium-Kleinkörper aus Vollmetall, aber es kann sich dabei auch um geschlossene Hohlkörper handeln.

Aus dem **Stand der Technik,** beispielsweise aus der Druckschrift US 2,944,917, ist bekannt, dass sich die Anhaftung von Polymeren, insbesondere von solchen mit niedriger Oberflächenenergie wie etwa Silikon oder Polytetrafluorethylen (PTFE), an Flächen aus Aluminium und Aluminiumlegierungen bedeutend verbessern lässt, indem man das Metall für einige Minuten mit konzentrierter Salzsäure bei Raumtemperatur behandelt. Es bilden sich dadurch Porenstrukturen im Metall, die Hinterschnitte und Verwinkelungen aufweisen. Wird ein Polymer in fließfähiger Form mit der so geätzten Oberfläche in Kontakt gebracht und verfestigt - z.B. in der US 2,944,917 eine wässrige Suspension von PTFE-Partikeln, die nach dem Verdampfen des Wassers thermisch verschmolzen werden -, dann lässt sich das Polymer auch mit großem Krafteinsatz nicht mehr vom Metall abziehen.

Die Ursache für das exzellente Haften zunächst fließfähiger, aushärtender Materialphasen am geätzten Aluminium ist ein mechanischer Formschluss ("mechanical interlocking") in einer ausgedehnten Schicht mit Verankerungsstrukturen entlang des gesamten geätzten Bereichs.

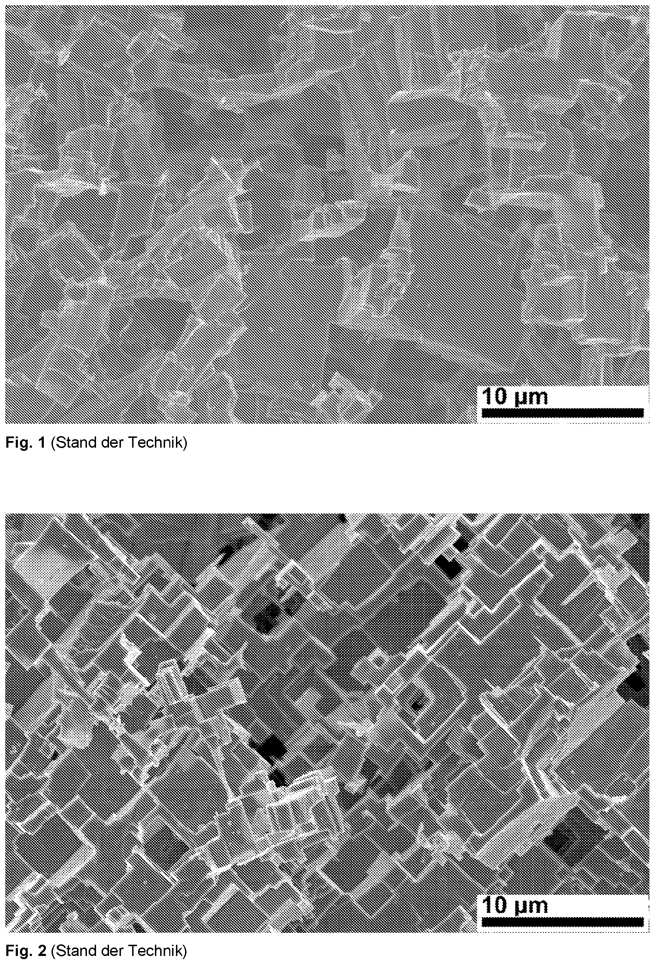

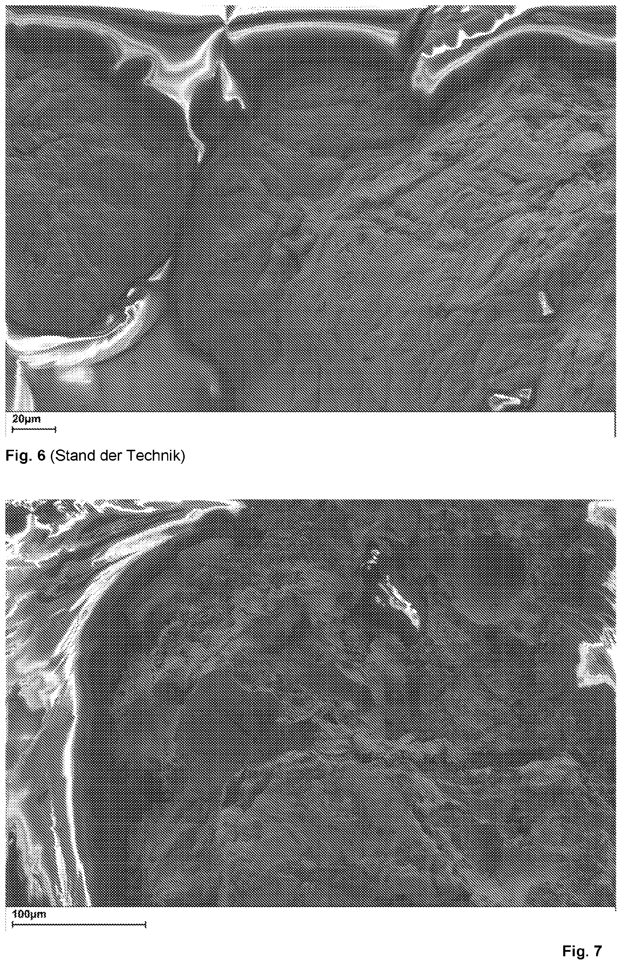

Beispielsweise aus der Arbeit von Jin Yang et al., "Superoleophobic textured aluminum surfaces", New J. Chem., 2011, 35, 2422-2426, lassen sich in Fig. 6 a und b Bilder der Oberfläche von reinem Aluminium nach einem Ätzangriff mit Salzsäure entnehmen. Weitere Beispielbilder für geätzte Aluminium-Oberflächen mit Verankerungsstrukturen zeigt die Fig. 1 in der Druckschrift US 2013/0264196 A1, die sich aber nicht mit der mechanischen Verankerung, sondern mit der Oberflächenvergrößerung von Aluminium-Anoden in Elektrolytkondensatoren befasst.

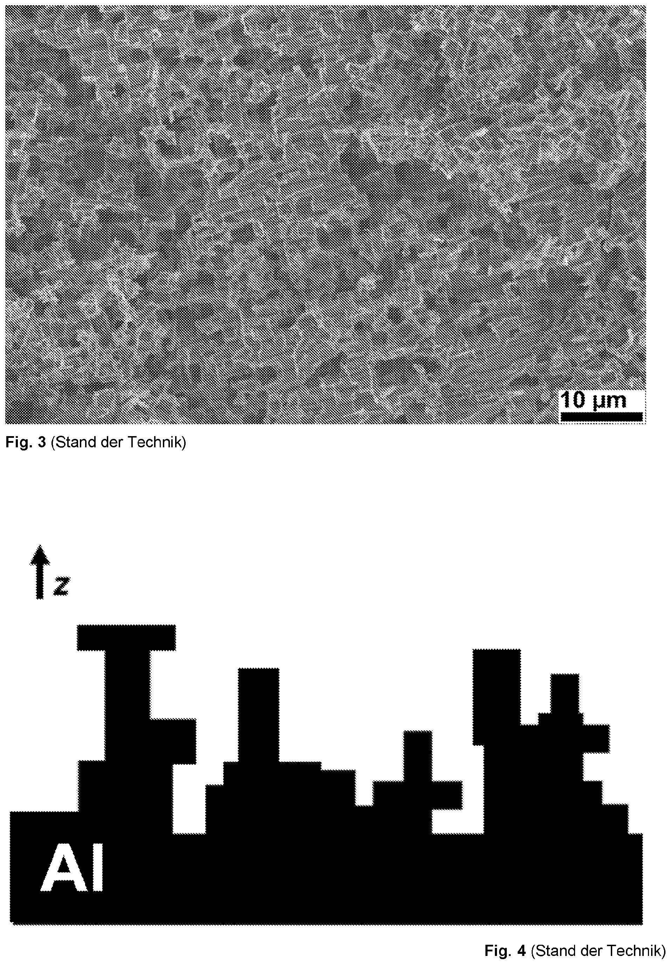

Die aus dem Stand der Technik bekannten Strukturen werden zur Verdeutlichung für drei verschiedene Aluminium-Legierungen auch in den Figuren 1 bis 3 der vorliegenden Beschreibung gezeigt. Sie erinnern an Korallen und weisen tief reichende Poren auf, die von verbliebenen Aluminium-Streben mit gezackter Säulenform umgeben und vielfach überdeckt sind. Fig. 4 stellt einen schematischen Querschnitt der durch Ätzung erzielbaren Verankerungsstrukturen senkrecht zur geätzten Aluminiumfläche dar. Da diese Säulen mitunter an aufeinander gestapelte Würfel erinnern, die eine verwirrende Skulptur bilden, haben die Erfinder das Herausätzen von Verankerungsstrukturen aus einem Metallblock mit dem Begriff "sculpturing" belegt.

Eine fließfähige Phase, die in die Poren vordringt, muss die zahlreichen Skulpturen wenigstens teilweise umfließen und letztlich nach dem Aushärten umschlossen halten. Die offenkundig hohe Flächendichte der Umschließungen bewirkt die insgesamt verbesserte Haftung der zunächst fließfähigen Phase an der geätzten Aluminiumoberfläche.

Die Verankerungsstrukturen sind durch Säureangriff auf Aluminiumflächen einfach und schnell, typisch binnen Minuten, herstellbar. Sie können dann - nach einer Reinigung - beispielsweise mit einer Polymer-Precursor-Lösung für ein Silikon oder ein Polyurethan kontaktiert werden. Eigene Experimente der Erfinder haben gezeigt, dass nach dem Aushärten des Polymers jeder Versuch der mechanischen Trennung von Polymer und Aluminium-Fläche unweigerlich im kohäsiven Versagen des Polymers endet. Die Adhäsion zwischen den Materialien ist für eine solche Verbindung ohne Bedeutung.

Nach Kenntnis der Erfinder wurde bislang nicht versucht, diese herausragende Verankerungsfähigkeit des Aluminiums auf Aluminium-Kleinkörper zu übertragen. Der Verwendungszweck solcher Kleinkörper liegt in der Erzeugung von Kompositen mit hohem Aluminium-Gehalt und verbesserten elektrischen und/oder mechanischen Eigenschaften.

Aluminium-Kleinkörper werden üblich nicht mit anderen Materialien wie Polymeren zu Kompositen verarbeitet, da die Kleinkörper unter Krafteinwirkung oft leicht herauslösbar sind und die Komposite dann zu strukturellem Versagen an den ausgedehnten und vielfach auch zusammenhängenden Polymer-Aluminium-Grenzflächen neigen würden. Man verlässt sich zur Kompositherstellung gewöhnlich auf die Beimengung von Nano- bis Mikropartikeln, weil sich diese viel robuster mit Matrixmaterialien verbinden lassen.

Eine interessante Ausnahme von dieser Regel ist der Druckschrift GB 791,653 zu entnehmen. Dort wird ein Kunstharz befüllt mit Aluminium-Fragmenten als Werkstoff mit erhöhter Schlag- und Biege- und Zugfestigkeit vorgestellt, wobei die Aluminium-Fragmente wenigstens zur Hälfte aus solchen mit einer minimalen Dimension größer als 0,14 mm bestehen sollen. Die Druckschrift geht dabei ohne weitere Erläuterung davon aus, dass Kunstharz und Aluminium gute Adhäsion aneinander zeigen. Dies ist aber für viele technisch relevante Polymere nicht ohne weiteres der Fall.

Ferner ist aus der Druckschrift WO 2010/076892 A1 ein Ätzverfahren für Kleinkörper aus Aluminiumlegierungen mit einer Salzsäure-Lösung mit einer Konzentration von 5 Gew.% HCl (bzw. 1,37 mol/l HCl), die zusätzlich 6 g/l Aluminium durch die Zugabe von 54 g/l AlCl₃.6H₂O enthält, bekannt. Das Ätzen der Kleinkörper wird für 2, 7 oder 10 Minuten bei einer Temperatur von 40°C durchgeführt. Weiterhin offenbart die Druckschrift geätzte Kleinkörper aus Aluminiumlegierungen, die mit dem Ätzverfahren herstellbar sind sowie Komposite (bzw. Materialverbunde), die diese Kleinkörper enthalten.

Die Druckschrift WO 2012/161183 A1 beschreibt ein Ätzverfahren für Kleinkörper aus Aluminiumlegierungen mit einer Salzsäure-Lösung mit einer Konzentration von 5 Gew.% HCl (bzw. 1,37 mol/l HCl), die zusätzlich 6 g/l Aluminium durch die Zugabe von 54 g/l AlCl₃.6H₂O enthält. Das Ätzen der Kleinkörper wird für 4 Minuten bei einer Temperatur von 66°C durchgeführt. Des Weiteren offenbart die Druckschrift geätzte Kleinkörper aus Aluminiumlegierungen die mit dem Ätzverfahren herstellbar sind sowie Komposite (bzw. Materialverbunde), da diese Kleinkörper enthalten.

Es ist daher die **Aufgabe** der Erfindung, ein Verfahren zur Ätzung der Oberfläche von Aluminium-Kleinkörpern vorzuschlagen, das die Kleinkörper mit Verankerungsstrukturen versieht. Das Verfahren soll dabei die kleinsten Strukturbreiten aber nicht wesentlich verändern bzw. abtragen oder gar die Kleinkörper ganz auflösen.

Es ist ferner Aufgabe der Erfindung, Materialverbunde enthaltend die mit Verankerungsstrukturen versehenen Aluminium-Kleinkörper zu schaffen, die verbesserte mechanische Eigenschaften aufweisen.

Eine weitere Aufgabe der Erfindung soll sein, weitere Verwendungsmöglichkeiten der modifizierten Aluminium-Kleinkörper bei der Erzeugung von Materialverbunden aufzuzeigen.

Die erste Aufgabe wird gelöst durch ein Ätzverfahren für Kleinkörper aus Aluminium oder einer Aluminiumlegierung mit den Schritten:
a. Bereitstellen einer Salzsäure-Lösung mit einer Konzentration von 1.1 bis 4.2 mol HCL pro Liter Wasser in einem trogförmigen Behälter;
b. Impfen der Salzsäure-Lösung durch chemisches Auflösen einer Menge Aluminium aus dem Intervall 0.5 g bis 17.5 g pro Liter zur Erzeugung einer Ätzlösung;
c. Zugabe der Kleinkörper zur Ätzlösung unverzüglich nach dem Impfen;
d. Ätzen der Kleinkörper für 0.5 bis 10 Minuten unter Umwälzen der Ätzlösung mit den Kleinkörpern derart, dass die Kleinkörper von der Bewegung der Ätzlösung mitgerissen werden;
e. Stoppen der Ätzung binnen weniger Sekunden durch Verdünnen der Ätzlösung mit Wasser;
f. Entnehmen der geätzten Kleinkörper aus der Ätzlösung;
g. Mehrmaliges Spülen der Kleinkörper mit Wasser unverzüglich nach dem Entnehmen und
h. Spülen der Kleinkörper mit einem organischen Trockenmittel.

Die Unteransprüche geben vorteilhafte Ausgestaltungen des Ätzverfahrens an. Ein Nebenanspruch ist auf die geätzten Aluminium-Kleinkörper gerichtet. Weitere Unteransprüche betreffen Materialverbunde enthaltend die geätzten Aluminium-Kleinkörper.

Es ist allgemein bekannt, dass ein Aluminium-Körper, der in eine konzentrierte Säure, z.B. Salzsäure, gelegt wird, zunächst für einige Minuten einem allmählichen, wenig reaktiven Ätzangriff unterliegt, der dann schlagartig in eine heftige und exotherme Reaktion umschlägt. Bei der Ätzung von Kleinkörpern im Sinne der vorliegenden Erfindung ist im Falle des Auftretens einer heftigen Reaktion mit der vollständigen Auflösung der Kleinkörper, wenigstens aber mit der Zerstörung der kleinsten Strukturbreiten der Kleinkörper zu rechnen, so dass das Ätzergebnis unvorhersehbar ist.

Die heftige Reaktion kann verhindert werden, indem man eine Säure mit geringer Konzentration verwendet, aber der Ätzvorgang wird dadurch erheblich verlängert, und das Ätzresultat ist auch dann noch schwer vorhersehbar. Denn Experimente der Erfinder, bei denen Aluminium-Kleinkörper in einen trogförmigen Behälter mit einer sauren Ätzlösung gegeben werden, zeigen zunächst das Folgende:
Die Ätzung startet sehr inhomogen, vermutlich an leicht korrodierenden Oberflächenbereichen, erkennbar an einer beginnenden Erhöhung der Rauigkeit, während andere Bereiche noch perfekt glatt erscheinen. Ausgehend von den Bereichen mit erhöhter Rauigkeit beginnt die Rauigkeit sich auch in den benachbarten Bereichen zu erhöhen (Inselwachstum). Erst nach einer Ätzdauer von ca. 10 Minuten findet auf der gesamten Oberfläche eine Ätzung statt. Aufgrund der zu unterschiedlichen Zeiten einsetzenden lokalen Rauigkeitserhöhung muss die Ätzung für ca. weitere 10 Minuten fortgesetzt werden, damit eine über die gesamte Fläche homogene Rauigkeit erreicht wird.

Werden die Kleinkörper hiernach aus der Ätzlösung herausgenommen, dann beginnt unverzüglich eine für das Auge über Blasenbildung sichtbare schnellere Auflösung, d.h. die durch die Ätzung entstehenden Reaktionsprodukte führen zu einer selbstverstärkenden Auflösung. Diese schnelle Auflösung reduziert jedoch die lokale Rauigkeit, führt also zu einer zu starken Elektropolitur.

Der soweit beschriebene Ätzprozess hat somit die Nachteile, dass er einerseits deutlich zu langsam abläuft und andererseits eine nicht zweckdienliche Elektropolitur bei der Entnahme der Kleinkörper aus dem Ätzbad zeigt. Überdies wird das Ätzbad durch den Ätzprozess in seiner Zusammensetzung verändert, so dass nach einer Standzeit eine zweite Ätzung von Kleinkörpern in demselben Bad zu abweichenden und nicht vorhersagbaren Resultaten führt.

Grundsätzlich unterscheidet man beim Ätzen von Oberflächen zwischen Defekt- und Politurätzen. Politurätzen zeichnet sich durch einen lokalen Ätzabtrag aus, der unabhängig von lokalen Unterschieden im elektrochemischen Potential an der Grenzfläche oder von lokalen Unterschieden in der Auflösungskinetik stattfindet. Dies wird oft durch eine indirekte Auflösung erreicht, bei der beispielsweise zunächst ein Metall oder ein Halbleiter chemisch in ein amorphes Oxid umgewandelt und in einem zweiten chemischen Schritt das Oxid aufgelöst wird. Sowohl Oxidbildung als auch Oxidauflösung sind wenig sensitiv auf lokale Unterschiede, was zu einer isotropen Politurätzung führt. Im Gegensatz dazu werden bei einer Defektätzung gerade solche elektrochemischen Reaktionen verwendet, die sensitiv auf die Unterschiede im lokalen elektrochemischen Potential sind oder über Unterschiede in der lokalen Reaktionskinetik Defektstrukturen bevorzugt herausätzen.

Die Erfinder haben erkannt, dass zur gewünschten Oberflächenstrukturierung von Aluminium-Kleinkörpern beide Ätzungen in einem günstigen Verhältnis zueinander ablaufen müssen. Damit z.B. kristallographische Oberflächen entstehen können, muss auf der Längenskala von Oberflächenkörnern eine isotrope Ätzung - leichte Politurätzung - stattfinden, während man auf größeren Längenskalen eine Anisotropie erreichen will.

Erfindungsgemäß wird dafür als Ätzlösung eine mit Aluminium "geimpfte" Salzsäure-Lösung vorgesehen.

Die Salzsäure-Lösung soll erfindungsgemäß eine Konzentration zwischen 1.1 und 4.2 mol HCL pro Liter Wasser besitzen, wobei nach Experimenten der Erfinder geringere Konzentrationen keine akzeptable Reaktionsgeschwindigkeit und höhere Konzentrationen keine zweckdienliche Prozesskontrolle mit sich bringen. Bevorzugt sollte die Konzentration zwischen 1.7 und 2,5 mol/l gewählt werden; ganz besonders bevorzugt ist eine Konzentration von etwa 2.1 mol/l.

Das Impfen der Salzsäure-Lösung ist von der Silizium-Chemie adaptiert und bedeutet das Anreichern der Säure mit - nicht langzeitstabilen - Zwischenprodukten des chemischen Auflösungsprozesses. Das Impfen erfolgt durch chemisches Auflösen von reinem Aluminium, wobei Experimente gezeigt haben, dass man zwischen 0,5 g und 17,5 g Aluminium pro Liter zweckdienlich auflösen kann. Geringere Mengen haben nicht den gewünschten Effekt und größere Mengen führen zu keiner Verbesserung, steigern aber die Materialkosten. Je geringer die aufgelöste Aluminiummenge gewählt ist, desto langsamer wird die Ätzung ablaufen. Als guter Kompromiss zwischen Kosten und Prozessgeschwindigkeit und als optimal für die Gleichmäßigkeit der Ätzung werden vorzugsweise 2 g bis 2,5 g Aluminium pro Liter Salzsäure zur Impfung aufgelöst. Zum Impfen können vorteilhafterweise einige der Aluminium-Kleinkörper dienen, die auch für die anschließende Oberflächenstrukturierung vorgesehen sind. Hierbei wird der Fachmann berücksichtigen, dass der Aluminiumanteil einer Legierung deutlich verringert sein kann, und er wird entsprechend die Menge zur Impfung erhöhen.

Nach der Impfung der Salzsäure-Lösung ist eine Ätzlösung mit zeitlich instabilen Inhaltsstoffen bereitgestellt. Sie ist so einsatzbereit und sollte auch unverzüglich benutzt werden; man kann sie nicht in dieser Zusammensetzung lagern. Dabei ist unter "unverzüglich" natürlich "so schnell wie möglich" zu verstehen, d.h. etwaige prozessbedingte Verzögerungen - z.B. zum Bewegen des Troges o. ä. - sind möglich, wobei aber der fortlaufende Abbau der instabilen Inhaltsstoffe einzukalkulieren ist. Eventuell muss der Anwender eine größere Menge Aluminium zur Impfung ansetzen, um sich die erforderliche Zeit bis zur Zugabe der zu ätzenden Kleinkörper zu "erkaufen".

Nach Zugabe der Aluminium-Kleinkörper zur Ätzlösung beginnt sofort ein gleichmäßiger Ätzangriff an den Kleinkörper-Oberflächen. Die Ätzlösung ist während der Ätzung kontinuierlich umzuwälzen, beispielsweise mit einem Magnetrührer. Es hat sich experimentell gezeigt, dass ein durch die Strömung der Ätzlösung hervorgerufener Abtransport der Reaktionsprodukte notwendig ist, um den selbstverstärkenden Prozess der Auflösung zu limitieren, der zu einer ungewollten Elektropolitur führt. Zugleich sollen alle Oberflächen der Aluminium-Kleinkörper geätzt werden, so dass diese nicht auf dem Boden des Ätztroges liegen bleiben dürfen. Die Umwälzung wird deshalb derart eingerichtet, dass die Strömung der Ätzlösung die Kleinkörper mitreißt und auch fortlaufend in Bewegung hält. Im einfachsten Fall ist dies durch eine ausreichend hohe Umdrehungszahl des Magnetrührers zu erreichen.

Vorzugsweise erfolgt das Ätzen der Aluminium-Kleinkörper unter Umwälzen der Ätzlösung für eine Zeitspanne zwischen 0.5 und 10 Minuten, beispielsweise und bevorzugt für 4 - 5 Minuten. Sehr kurze Ätzdauern sind mit hoher Salzsäure-Konzentration und einer schwierigeren Prozesskontrolle verbunden. Insbesondere wird der anschließende Ätzstopp komplizierter und auch teurer. Ätzdauern jenseits von 10 Minuten sind nicht zu empfehlen, weil man neben einer geringen Ausbeute pro Zeit auch noch ein schnell alterndes Ätzbad mit sich verändernden Inhaltsstoffen in Kauf nehmen muss.

Der Ätzprozess wird erfindungsgemäß in der Ätzlösung gestoppt durch Verdünnen der Salzsäure mittels Fluten mit Frischwasser. Das Fluten und Verdünnen der Salzsäure soll binnen weniger Sekunden erfolgen, während die verdünnte Ätzlösung zusammen mit den Kleinkörpern weiter umgewälzt wird. Hiernach werden die geätzten Kleinkörper aus dem Ätzbad genommen, mehrmals mit Wasser und schließlich mit einem organischen Trockenmittel, beispielsweise Aceton oder Isopropanol, gespült.

Die so erzeugten geätzten Aluminium-Kleinkörper sind lagerstabil und weisen gewöhnlich auf der gesamten, wenigstens aber auf dem überwiegenden Anteil ihrer frei liegenden Oberfläche Verankerungsstrukturen auf, die bisher nur bei großen geätzten Aluminium-Oberflächen gesehen worden sind. Die Verankerungsstrukturen sind gebildet aus tief geätzten, unregelmäßigen Poren und den zwischen den Poren verbliebenen, in der Regel verwinkelten Reststrukturen. Die Eindringtiefe der tiefsten geätzten Pore bezogen auf die höchste Erhebung einer Reststruktur nach dem Ätzangriff liegt typisch im Intervall zwischen etwa 20 und 50 Mikrometer.

Erfindungsgemäß ist die lokale und zeitliche Zusammensetzung der Ätzlösung für das Gelingen der Oberflächenätzung von entscheidender Bedeutung. Diese Zusammensetzung ist nicht allein durch eine thermodynamische Gleichgewichtskonzentration bestimmt, sondern auch durch die lokale Kinetik des Ätzvorgangs und durch den zeitlichen Abbau instabiler - transienter-Zwischenprodukte. Die zweckdienliche Zusammensetzung lässt sich deshalb nicht allein durch das bloße Anrühren einer Ätzlösung erreichen. Vielmehr spielen auch ihre Strömung und ihre Alterung - binnen Minuten - eine Rolle.

Durch geeignetes Nachchargieren kann die Konzentration der Ätzlösung auch in einem kontinuierlichen Prozess konstant gehalten werden, wobei die für die autokatalytische Reaktion notwendige Konzentration an transienten Reaktionsprodukten hoch genug bleiben kann. Das Hineingeben und Herausnehmen der zu ätzenden Aluminium-Kleinkörper muss zeitkritisch erfolgen, wobei die Ätzung vor allem schnell genug zu stoppen ist, z.B. durch sehr schnelles Eintauchen in reines Wasser.

Die erfindungsgemäß geätzten Aluminium-Kleinkörper zeigen dieselbe Form wie vor der Ätzung und bewahren dabei auch im Wesentlichen ihre kleinsten Strukturbreiten. Sie sind jedoch von einer extrem rauen Oberfläche gekennzeichnet.

Nachfolgend werden Ausführungsbeispiele der Erfindung anhand der beiliegenden Zeichnungen in der **Figurenbeschreibung** detailliert beschrieben, wobei diese die Erfindung erläutern sollen und nicht beschränkend zu werten sind:
Es zeigen:
- Fig. 1: eine geätzte Fläche auf annähernd reinem Aluminium (Al: ca. 99.5 %, Stand der Technik);
- Fig. 2: eine geätzte Fläche auf der Legierung AIMg3 (Stand der Technik);
- Fig. 3: eine geätzte Fläche auf der Legierung AlMgSi0.5 (Stand der Technik);
- Fig. 4: eine schematische Skizze der Verankerungsstrukturen, die sich entlang der z-Achse senkrecht zur Aluminiumfläche durch den Ätzangriff (vgl. Fig. 1 bis 3) herausbilden (Stand der Technik);
- Fig. 5 a): ein Geflecht aus modifiziertem Aluminium-Draht - hier: Legierung AIMg5 - mit einem Drahtdurchmesser von etwas mehr als 100 Mikrometer und

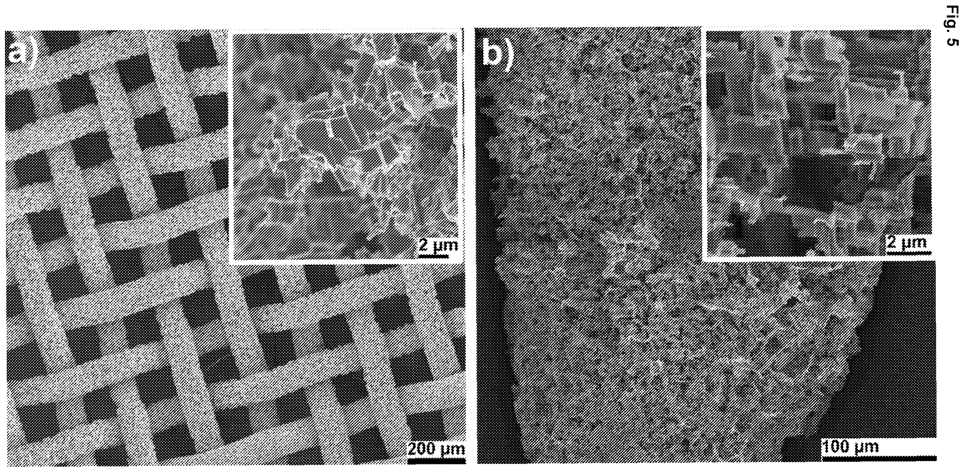

- Fig. 5 b): ein unregelmäßig geformter Aluminium-Kleinkörper - hier: Al 99.7% - mit geätzter Oberfläche und einer kleinsten Strukturbreite von einigen 100 Mikrometer.
- Fig. 6: eine Rissfläche durch ein Komposit enthaltend Aluminium-Kleinkörper eingebettet in einem Polymer (hier: Polythiourethan, PTU) nach einem Zugfestigkeitstest (Stand der Technik);
- Fig. 7: eine Rissfläche durch ein Komposit wie in Fig. 6, nunmehr mit geätzten Aluminium-Kleinkörpern, die beim Zugfestigkeitstest mit zerbrechen;

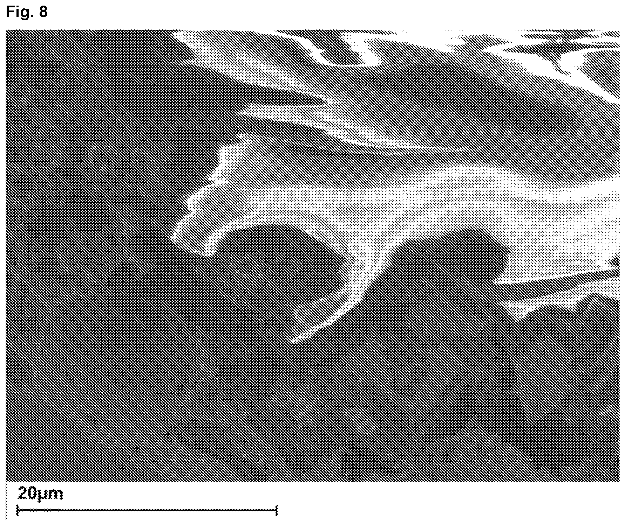

- Fig. 8: dieselbe Rissfläche wie in Fig. 7 an anderer Stelle und vergrößert, wo das Umschließen der Verankerungsstrukturen durch das PTU sichtbar ist;

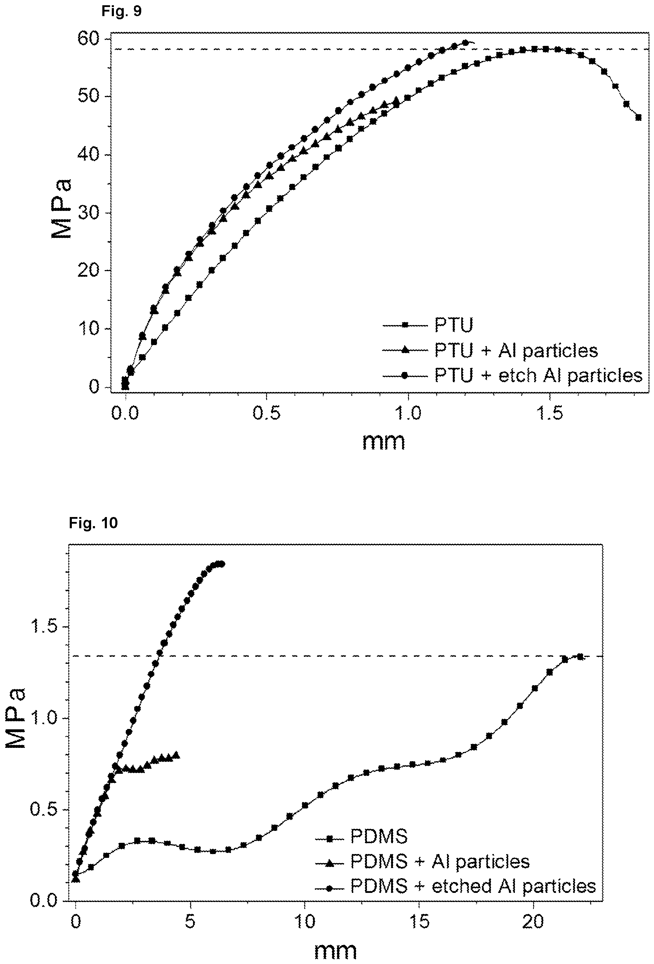

- Fig. 9: die Messdaten der Zugfestigkeitstests für die Komposite der Figuren 6 bis 8 im Vergleich mit einer Probe aus reinem PTU;
- Fig. 10: die Messdaten der Zugfestigkeitstests für reines Polydimethylsiloxan (PDMS) sowie Komposite aus PDMS enthaltend unbehandelte und geätzte Aluminium-Kleinkörper;

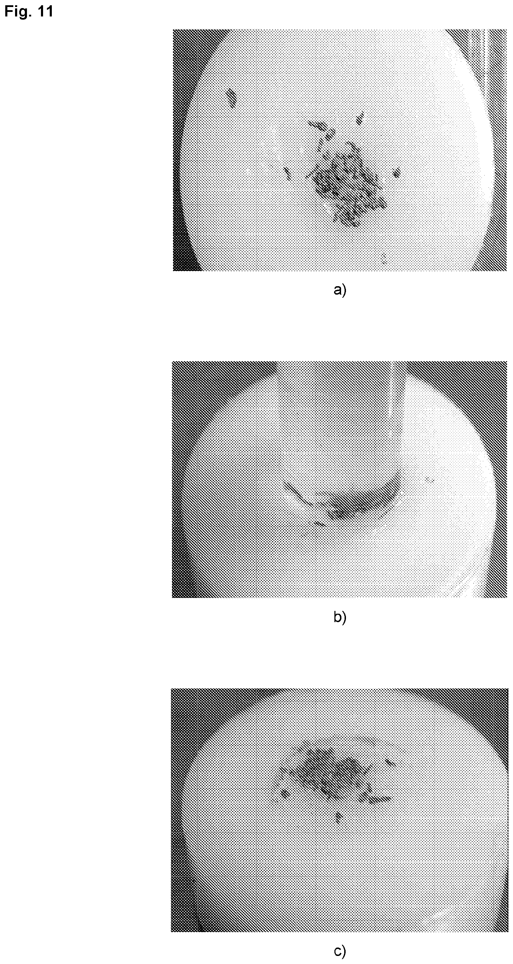

- Fig. 11 a) bis c): eine vorgefertigte Scheibe aus thermoplastischem Polyoxymethylen (POM), die durch Erwärmen der Oberfläche in der Mitte partiell aufgeschmolzen und mit geätzten Kleinkörpern bestreut worden ist und entsprechend untersucht wurde.

Die Figuren **1 bis 4** wurden eingangs in der Beschreibung des Standes der Technik behandelt, um die Gestalt und Herstellbarkeit von Verankerungsstrukturen auf verschiedenen Aluminiumlegierungen zu illustrieren.

Aus **Fig. 5** ist nun gut ersichtlich, dass auch der erfindungsgemäße Ätzangriff mit Salzsäure auf die Aluminium-Kleinkörper auf solche Verankerungsstrukturen führt. Die Ätzung umgibt dabei jeden einzelnen Kleinkörper mit einer Ummantelung mit extremer Oberflächenrauigkeit, die dicht liegende, mit Hinterschnitten und Verwinkelungen versehene Poren umfasst. Die Dicke des Mantels entspricht dabei der Tiefe der geätzten Poren bzw. der Länge der verwinkelten Reststrukturen.

Die Ummantelung umschließt den Kleinkörper, aber sie muss ihn nicht völlig bedecken. Tatsächlich wird der Säureangriff an allen frei liegenden Oberflächen des Kleinkörpers erfolgen, aber es ist insbesondere auch möglich, einen langen Draht mit Verankerungsstrukturen auszustatten und diesen nach der Ätzung in eine Mehrzahl von Drahtfilamenten zu zerteilen. Die einzelnen Filamente weisen dann auf ihren Schnittoberflächen keine Verankerungsstrukturen auf, was jedoch lediglich dann zum Nachteil gereichen kann, wenn die nicht geätzten Oberflächen dem Betrage nach die geätzten Oberflächen der Filamente übersteigen. Dies wird man in der Regel vermeiden wollen und können, indem man die Filamente lang genug belässt.

**Fig. 5 a)** zeigt ein Drahtgeflecht aus AIMg5-Drähten, die in der bereits geflochtenen Form ins Ätzbad gegeben worden sind. Die Drähte wiesen vor der Ätzung einen Drahtdurchmesser - hier: Strukturbreite - von mehr als 100 Mikrometer auf und tragen nach der Ätzung Verankerungsstrukturen, die jede ursprünglich freie Fläche des Geflechts bedecken.

**Fig. 5 b)** zeigt ein entsprechendes Ätzresultat für einen grob sphärischen Kleinkörper, dessen kleinste Strukturbreite hier mit seinem kleinsten Durchmesser von einigen 100 Mikrometer zu identifizieren ist. Die Inlays in den Figuren 5 a) und b) zeigen jeweils Ausschnittvergrößerungen.

Es ist leicht nachvollziehbar, dass das Vermengen von mit Verankerungsstrukturen überzogenen Aluminium-Kleinkörpern mit einem zunächst fließfähigen und hiernach aushärtenden Material nach dessen Aushärtung zu einem Komposit führt, das jedenfalls nicht durch ein Versagen der Adhäsion des Aluminiums an dem Material zerstört oder zerlegt werden kann. Vielmehr ist entweder ein Kohäsionsbruch des Materials, z.B. eines Polymers, oder das Zerbrechen der Kleinkörper oder beides zu bewerkstelligen.

Zum experimentellen Nachweis haben die Erfinder u. a. geätzte Kleinkörper aus Aluminium-Granulat mit mehreren 100 Mikrometern Korndurchmesse in fließfähige Polymer-Precursor-Polythiourethan (PTU) und Polydimethylsiloxan (PDMS) - gegeben und mehrere Teststreifen gleicher Größe gegossen. Die Aluminium-Füllungsgrade der Komposite betragen jeweils etwa 20 % bis 30 %. Nach dem Aushärten der Polymere wurde die Zugfestigkeit der Streifen gemessen. In allen Fällen wurden die Streifen schließlich durchgerissen und für PTU zudem unter dem Elektronenmikroskop inspiziert.

Exemplarisch ist in **Fig. 6** die Rissfläche eines Teststreifens zu sehen, in dem PTU mit unbehandeltem Aluminium-Granulat vermischt worden ist. Dies entspricht einer Variation des Vorschlages der Druckschrift GB 791,653, wenn Kunstharz durch PTU ersetzt wird, und soll hier als ein Beispiel für den Stand der Technik angesehen werden. Die Rissfläche zeigt, dass die Aluminium-Kleinkörper unbeschädigt sind und dass das Polymer von der Aluminium-Oberfläche weitgehend sauber abgezogen worden ist. Die Adhäsion des PTU am Aluminium hat offensichtlich versagt und den Gesamtabriss des Teststreifens dadurch eingeleitet.

Demgegenüber sind die erfindungsgemäß geätzten Aluminium-Kleinkörper nach dem Abreißen des diese enthaltenden Teststreifens selbst zerrissen worden, wie **Fig. 7** zeigt. Die scharfkantig zerklüftete Oberfläche des gebrochenen Aluminium-Kleinkörpers unterscheidet sich deutlich von der eher gewellten und abgerundeten Oberfläche des intakten Granulatkorns in Fig. 6.

An einzelnen Stellen der Rissfläche kann man auch den mechanisch robusten Formschluss zwischen PTU und dem Aluminium-Kleinkörper mit Verankerungsstrukturen erkennen, beispielsweise zu sehen in **Fig. 8****.**

In **Fig. 9** sind die Messergebnisse für PTU in einem Zugspannungs-Dehnungsdiagramm dargestellt. Die Komposite zeigen von Beginn an eine deutlich erhöhte Zugfestigkeit gegenüber dem reinen PTU. Während sich das reine Polymer bis zu einer Zugspannung von etwa 58 MPa mehr oder weniger elastisch dehnen lässt und danach irreversibel verformt wird (kohäsives Limit), steht den Kompositen eine solche Verformung nicht zur Verfügung - sie reißen vielmehr abrupt ab. Das Komposit mit unbehandeltem Aluminium-Granulat erweist sich zwar als zugfester - im Einklang mit der Lehre der GB 791,653 - für geringere Zugspannungen, versagt jedoch infolge der mäßigen Adhäsion des PTU am Aluminium bereits unterhalb von 50 MPa. Im Gegensatz dazu tritt bei dem Komposit mit geätzten Kleinkörpern kein Adhäsionsversagen auf; es zeigt überlegene Zugfestigkeit bis hin zu etwa 60 MPa und wird erst durch das Brechen der Kleinkörper zerstört.

Für das elastischere und weniger zugfeste Polymer PDMS (verwendbar als ein medizinisches Silikon) sind die Effekte der Aluminium-Kleinkörper im Trend identisch, aber noch sehr viel ausgeprägter, wie man dem Zugspannungs-Dehnungsdiagramm in **Fig. 10** entnehmen kann.

Es ist bemerkenswert, dass die obere Grenze der elastischen Dehnung des reinen Polymers, insbesondere bei PDMS sehr deutlich, überschritten werden kann. Dies spricht dafür, dass die Polymermatrix lokal durch die Kleinkörper von Zugspannung entlastet wird. Dies legt wiederum die Vermutung nahe, dass die konkrete Form der Kleinkörper einen Einfluss auf das Messergebnis haben kann, vor allem, wenn diese zu einer effizienten Kraftverteilung in die Umgebung beiträgt. Eine besonders vorteilhafte Form für die Kleinkörper wird deshalb in der Tetrapoden-Form gesehen, auch bekannt als "Fußangeln" oder "Krähenfüße". Dementsprechend aus Aluminiumdraht geformte Kleinkörper, beispielsweise aus zwei gleich langen Drähten gebildete Drahtgebinde, sind billig herstellbar und ohne weiteres erfindungsgemäß mit Verankerungsstrukturen auszustatten.

Die Verwendung der geätzten Kleinkörper ist nicht auf Polymere beschränkt.

Beispielsweise kann das zunächst fließfähige und hiernach aushärtende Material ein Precursor für ein Sol-Gel-Verfahren zur Herstellung keramischer Schichten sein. Solche Precursor härten aus durch einen thermischen Sinterschritt bei typischen Temperaturen um einige 100 °C unter Austreiben der organischen Lösungsmittel. Die Aluminium-Kleinkörper mit dem umschließenden Mantel mit Verankerungsstrukturen können solche Temperaturen unbeschadet überstehen. Sie werden sich zudem - gleich nach der Erzeugung und der Entnahme der geätzten Kleinkörper aus der Ätzlösung an die Luft - sehr schnell mit einer einige Nanometer dicken Schicht aus Aluminiumoxid überziehen und dadurch noch weiter chemisch passivieren.

Im Folgenden werden einige erfindungsgemäße Materialverbunde vorgestellt, die sich aus einer bestimmten Art der Verwendung von modifizierten Aluminium-Kleinkörpern ergeben können.

### Verwendungsbeispiel "Kaltgießen elektrisch leitender Formgußkörper"

Vorzugsweise kleine Kugeln aus Aluminium, deren Oberflächen mit Verankerungsstrukturen ausgestattet sind, können in eine weitgehend beliebige Gießform gegeben werden, wo sie sich - ggf. nach einigem Rütteln an der Form - zu einer Kugelpackung verdichten. Die Zwischenräume können mit einem zunächst fließfähigen - bevorzugt niedrig viskosen - Polymer-Precursor getränkt werden, beispielsweise mit einem Polyurethan oder Polymethylmethacrylat oder Polyethylen. Nach dem Aushärten des Polymers sind die modifizierten Aluminium-Kugeln mit Durchmessern zwischen 100 Mikrometer und mehr als einem Zentimeter, bevorzugt zwischen 0,5 und 5 Millimeter, nur noch unter Zerreißen des Polymers voneinander zu trennen. Zugleich ist der gegossene Formkörper vollständig elektrisch leitend, da sich die Kugeln von Anfang an in leitendem Kontakt befanden und so fixiert worden sind. Es hat sich ein perkolierendes, elektrisches Netzwerk gebildet. Es ist von besonderem Vorteil, Kugeln mit relativ großem Durchmesser, etwa größer als 0,5 Millimeter, zu verwenden, da hierdurch ein zusammenhängender, offener Porenraum in der Kugelpackung gebildet wird, der sich sehr leicht vom Polymer-Precursor durchsetzen und auffüllen lässt.

Ein solcher Formgußkörper kann bei Raumtemperatur - also ohne erheblichen Energieeintrag am Ort des Gießens - in beliebiger Größe und Gestalt gebildet werden. Er weist im Wesentlichen die mechanische Belastbarkeit des Polymers und die elektrische Leitfähigkeit von Aluminium auf. Der Aluminium-Füllungsgrad eines leitfähigen Komposits liegt in der Regel oberhalb von 50 %.

### Verwendungsbeispiel "Verdübeln"

Materialien, die entweder intrinsisch nur schwach aneinander haften, z.B. Silikon und PTFE, oder die zwar eine gewisse Haftung zeigen, aber infolge sehr unterschiedlicher Wärmeausdehnung beim thermischen Zyklieren zur Ablösung voneinander neigen, können hinsichtlich ihrer Nutzung als Materialverbunde als inkompatibel bezeichnet werden. Gleichwohl können solche Materialsysteme durch Haltekörper entlang ihrer Grenzfläche miteinander fest mechanisch verbunden, sozusagen "verdübelt", werden. Dazu ist es allerdings erforderlich, dass die zu verbindenden inkompatiblen Materialien bei der Herstellung des Materialverbundes beide in zunächst fließfähigen und hiernach aushärtenden Phasen bereitgestellt werden können. Haltekörper mit Verankerungsstrukturen werden jeweils teilweise mit einem der beiden Materialien verankert und halten diese dann durch ihre eigene Struktur fortwährend zusammen.

Geeignete Haltekörper können Aluminium-Drahtfilamente, beispielsweise in Zylinder- oder Quaderform, mit der erfindungsgemäßen Oberflächenmodifikation sein. Diese können auf ein erstes Material, das wenigstens im Bereich seiner Oberfläche fließfähig ist, aufgelegt oder aufgestreut werden, wodurch ein Teil der Verankerungsstrukturen bereits von der fließfähigen Phase durchsetzt wird. Sobald diese aushärtet, sind die Haltekörper sehr fest mit dem ersten Material verbunden. Dieses trägt nun praktisch selbst Verankerungsstrukturen für das zweite Material, nämlich konkret auf den noch freien Oberflächen der nur teilweise in das erste Material eingebetteten Haltekörper.

Dass die Haltekörper nicht vollständig in der fließfähigen Phase des ersten Materials eintauchen, lässt sich am leichtesten dadurch verhindern, dass die Schichtdicke der fließfähigen Phase genau vorbestimmt wird - beispielsweise als Funktion der Zeit bei einer Polymerextrusion - und dann zum gewünschten Zeitpunkt Haltekörper aufgebracht werden, die einfach zu groß sind, als dass sie noch vollständig eintauchen könnten. Dies ist ein wichtiger Unterschied zu ähnlichen Verankerungsvorschlägen aus dem Stand der Technik, bei dem Nano- bis Mikropartikel zur Verankerung benutzt werden sollen. Deren Einbettungsgrad ist prinzipiell ungewiss, und ist die dort zur Verfügung gestellte "Menge an Verankerungsmöglichkeiten" für das zweite Material unsicher. Bei der Verwendung von Aluminium-Kleinkörpern kann hingegen hohe Sicherheit über die Fläche mit Verankerungsstrukturen, die das zweite Material zur Befestigung nutzen kann, gewährleistet werden.

In **Fig. 11 a)** ist eine vorgefertigte Scheibe aus thermoplastischem Polyoxymethylen (POM) abgebildet, die durch Erwärmen der Oberfläche in der Mitte partiell aufgeschmolzen und mit geätzten Kleinkörpern bestreut worden ist. Die Kleinkörper wurden zusätzlich in das weiche POM hineingedrückt. Nach dem Wiedererstarren des POM wird ein Zylinder aus Ethylenvinylacetat (EVA) an einer Deckfläche thermisch aufgeweicht und mit der weichen Seite auf die teilweise in POM eingebetteten Kleinkörper gepresst, bis auch das EVA wieder erstarrt ist.

Der so gebildete Verbund, zu sehen in **Fig. 11 b)****,** wird im anschließenden Zugversuch wieder auseinandergerissen, und man findet, dass das EVA knapp oberhalb der Aluminium-Kleinkörper kohäsiv versagt.

Die Haltekörper verbleiben von Polymer umhüllt auf der POM-Scheibe, wie **Fig. 11 c)** zeigt.

Weiterhin können Materialverbunde aus einer spröden Keramik, beispielsweise aus Blei-Zirkonat-Titanat (PZT), und einem weichelastischen Polymer, etwa aus Silikon, hergestellt werden, indem z.B. auf einem PZT-Werkstück ein Sol-Gel-Film aus einem PZT-Precursor mit vorbestimmter Filmdicke angeordnet wird, wobei Aluminium-Kleinkörper, deren kleinste Strukturbreite größer als die Sol-Gel-Filmdicke ist, auf den Sol-Gel-Film aufgebracht und in diesen eingebettet werden. Nach der Wärmebehandlung zur Pyrolyse des Sol-Gel-Films weist das PZT-Werkstück an der behandelten Fläche fest gebundene Kleinkörper mit Verankerungsstrukturen nach außen hin auf, an denen sich Silikon in herausragender Weise "festhalten" kann.

Es ist hier zu betonen, dass die Verankerungsstrukturen der Aluminium-Kleinkörper aufgrund ihrer filigranen, korallenartigen Struktur eine gewisse Flexibilität und Nachgiebigkeit gegenüber Kraftangriffen besitzen. Kraftangriffe auf die Haltekörper selbst werden dadurch etwas gepuffert, d.h. abgeschwächt. Zwei Materialien mit sehr verschiedenen Wärmeausdehnungskoeffizienten können ohne weiteres auch bei hohen Temperaturschwankungen im Verbund bleiben, wenn ihr Zusammenhalt auf der gemeinsamen Verankerung an denselben Kleinkörpern mit solchen Verankerungsstrukturen beruht, weil diese wie Haltebolzen oder Dübel wirken, die sich nicht herauslösen lassen, solange die Materialien selbst nicht strukturell versagen.

## Patentansprüche

1. Ätzverfahren für Kleinkörper aus Aluminium oder einer Aluminiumlegierung mit den Schritten:
a. Bereitstellen einer Salzsäure-Lösung mit einer Konzentration von 1.1 bis 4.2 mol HCl pro Liter Wasser in einem trogförmigen Behälter;
b. Impfen der Salzsäure-Lösung durch chemisches Auflösen einer Menge Aluminium aus dem Intervall 0.5 g bis 17.5 g pro Liter zur Erzeugung einer Ätzlösung;
c. Zugabe der Kleinkörper zur Ätzlösung unverzüglich nach dem Impfen;
d. Ätzen der Kleinkörper für 0.5 bis 10 Minuten unter Umwälzen der Ätzlösung mit den Kleinkörpern derart, dass die Kleinkörper von der Bewegung der Ätzlösung mitgerissen werden;
e. Stoppen der Ätzung binnen weniger Sekunden durch Verdünnen der Ätzlösung mit Wasser;
f. Entnehmen der geätzten Kleinkörper aus der Ätzlösung;
g. Mehrmaliges Spülen der Kleinkörper mit Wasser unverzüglich nach dem Entnehmen und
h. Spülen der Kleinkörper mit einem organischen Trockenmittel.

2. Ätzverfahren nach Anspruch 1,
**gekennzeichnet durch**
Verwendung einer Salzsäure-Lösung mit einer Konzentration von 1.7 bis 2.5 mol HCL pro Liter Wasser, bevorzugt um 2.1 mol/l.

3. Ätzverfahren nach einem der Ansprüche 1 oder 2,
**dadurch gekennzeichnet, dass**
das Impfen der Salzsäurelösung durch chemisches Auflösen von 2 bis 2,5 g Aluminium pro Liter erfolgt.

4. Ätzverfahren nach einem der Ansprüche 1 bis 3,
**dadurch gekennzeichnet, dass**
das Ätzen der Kleinkörper unter Umwälzen der Ätzlösung mit den Kleinkörpern für 4 bis 5 Minuten erfolgt.

5. Geätzter Kleinkörper aus Aluminium oder einer Aluminiumlegierung herstellbar mit dem Verfahren nach einem der vorangehenden Ansprüche,
**dadurch gekennzeichnet, dass**
der überwiegende Anteil der Oberfläche des Kleinkörpers Verankerungsstrukturen aufweist, wobei die Form des Kleinkörpers im Wesentlichen seiner Form vor der Ätzung entspricht.

6. Geätzter Kleinkörper nach Anspruch 5,
**dadurch gekennzeichnet, dass**
der Kleinkörper ein Draht mit einem Drahtdurchmesser von wenigstens 50 Mikrometer mit einer Länge von wenigstens 0,5 Millimeter ist.

7. Geätzter Kleinkörper nach Anspruch 5,
**dadurch gekennzeichnet, dass**
der Kleinkörper ein Drahtgeflecht oder ein Drahtgebinde, vorzugsweise eine Tetrapode, ist.

8. Verbundwerkstoff aufweisend geätzte Kleinkörper nach einem der Ansprüche 5 bis 7, umfassend, wenigstens eine Materialphase, die einen zunächst fließfähigen und hiernach ausgehärteten Zustand besitzt,
**dadurch gekennzeichnet, dass**
wenigstens ein Teil der Verankerungsstrukturen der geätzten Kleinkörper von der ausgehärteten Materialphase umschlossen ist.

9. Verbundwerkstoff nach Anspruch 8,
**dadurch gekennzeichnet, dass**
die geätzten Kleinkörper in einer ausgehärteten Polymermatrix eingebettet sind.

10. Verbundwerkstoff nach Anspruch 8 oder 9,
**dadurch gekennzeichnet, dass**
der Verbundwerkstoff eine höhere maximale Zugfestigkeit aufweist als die ausgehärtete Materialphase ohne geätzte Kleinkörper.

## Claims

1. An aluminium or aluminium alloy fragment etching method comprising the steps of:
a. providing a hydrochloric acid solution having a concentration of 1.1 to 4.2 moles of HCl per litre of water in a trough- or vat-shaped container;
b. inoculating the hydrochloric acid solution by chemically dissolving a quantity of aluminium ranging from 0.5 g to 17.5 g per litre to produce an etching solution;
c. adding the fragments to the etching solution immediately after the inoculation;
d. etching the fragments for 0.5 to 10 minutes while circulating the etching solution with the fragments such that the fragments are entrained by the movement of the etching solution;
e. stopping the etching within a few seconds by diluting the etching solution with water;
f. removing the etched fragments from the etching solution;
g. repeatedly rinsing the fragments with water immediately after the removal and
h. rinsing the fragments with an organic desiccant.

2. The etching method according to claim 1,
**characterised by**
use of a hydrochloric acid solution with a concentration of 1.7 to 2.5 moles of HCl per litre of water, preferably around 2.1 mol/l.

3. The etching method according to one of claims 1 or 2,
**characterised in that**
the inoculation of the hydrochloric acid solution takes place by chemically dissolving 2 to 2.5 g of aluminium per litre.

4. The etching method according to one of claims 1 to 3,
**characterised in that**
the fragments are etched while circulating the etching solution with the fragments for 4 to 5 minutes.

5. An etched fragment made of aluminium or an aluminium alloy that can be produced by the method according to one of the preceding claims,
**characterised in that**
the predominant portion of the surface of the fragment has anchoring structures, wherein the shape of the fragment substantially corresponds to its shape before the etching.

6. The etched fragment according to claim 5,
**characterised in that**
the fragment is a wire having a wire diameter of at least 50 micrometres and a length of at least 0.5 millimetres.

7. The etched fragment according to claim 5,
**characterised in that**
the fragment is a wire mesh or a wire bundle, preferably a tetrapod.

8. A composite material comprising etched fragments according to one of claims 5 to 7, comprising at least one material phase which has an initially flowable and subsequently cured state,
**characterised in that**
at least part of the anchoring structures of the etched fragments is enclosed by the cured material phase.

9. The composite material according to claim 8,
**characterised in that**
the etched fragments are embedded in a cured polymer matrix.

10. The composite material according to claim 8 or 9,
**characterised in that**
the composite material has a higher maximum tensile strength than the cured material phase without etched fragments.

## Revendications

1. Procédé de mordançage pour petits corps en aluminium ou en alliage d'aluminium, comprenant les étapes consistant à :
a. préparer une solution d'acide chlorhydrique ayant une concentration comprise entre 1,1 et 4,2 mol d'HCl par litre d'eau dans un récipient en forme d'auge ;
b. ensemencer la solution d'acide chlorhydrique en solubilisant chimiquement une quantité d'aluminium comprise entre 0,5 g et 17,5 g par litre pour obtenir une solution de mordant ;
c. ajouter les petits corps à la solution de mordant immédiatement après l'ensemencement ;
d. mordancer les petits corps pendant 0,5 à 10 minutes en faisant circuler la solution de mordant avec les petits corps de telle sorte que les petits corps soient entraînés par le mouvement de la solution de mordant ;
e. arrêter le mordançage en quelques secondes en diluant la solution de mordant avec de l'eau ;
f. retirez les petits corps mordancés de la solution de mordant ;
g. rincer plusieurs fois les petits corps avec de l'eau immédiatement après l'enlèvement, et
h. rincer les petits corps avec un déshydratant organique.

2. Procédé de mordançage selon la revendication 1,
**caractérisé par**
l'utilisation d'une solution d'acide chlorhydrique ayant une concentration comprise entre 1,7 et 2,5 mol d'HCl par litre d'eau, de préférence 2,1 mol/l.

3. Procédé de mordançage selon l'une des revendications 1 ou 2,
**caractérisé en ce que**
la solution d'acide chlorhydrique est ensemencée par dissolution chimique de 2 à 2,5 g d'aluminium par litre.

4. Procédé de mordançage selon l'une des revendications 1 à 3,
**caractérisé en ce que**
le mordançage des petits corps est réalisé en faisant circuler la solution de mordant avec les petits corps pendant 4 à 5 minutes.

5. Petit corps mordancé en aluminium ou en alliage d'aluminium pouvant être produit par le procédé selon l'une des revendications précédentes,
**caractérisé en ce que**
la majeure partie de la surface du petit corps présente des structures d'ancrage, la forme du petit corps correspondant sensiblement à sa forme avant mordançage.

6. Petit corps mordancé selon la revendication 5,
**caractérisé en ce que**
le petit corps est un fil ayant un diamètre de fil d'au moins 50 micromètres avec une longueur d'au moins 0,5 millimètre.

7. Petit corps mordancé selon la revendication 5,
**caractérisé en ce que**
le petit corps est un grillage métallique ou un écheveau métallique, de préférence un tétrapode.

8. Matériau composite présentant de petits corps mordancés selon l'une des revendications 5 à 7, comprenant au moins une phase de matériau qui présente un état initialement fluide qui ensuite durcit,
**caractérisé en ce que**
au moins une partie des structures d'ancrage des petits corps mordancés est entourée par la phase de matériau durcie.

9. Matériau composite selon la revendication 8,
**caractérisé en ce que**
les petits corps mordancés sont noyés dans une matrice polymère durcie.

10. Matériau composite selon la revendication 8 ou 9,
**caractérisé en ce que** le matériau composite présente une résistance à la traction maximale plus élevée que la phase de matériau durcie sans petits corps mordancés.
